Europäisches Patentamt

European Patent Office

Office européen des brevets

(19)

(11) Veröffentlichungsnummer: **0 309 016 B1**

(12) **EUROPÄISCHE PATENTSCHRIFT**

(45) Veröffentlichungstag der Patentschrift:
17.04.91 Patentblatt 91/16

(51) Int. Cl.$^5$: **C22B 1/24,** C22B 7/02

(21) Anmeldenummer: 88201775.9

(22) Anmeldetag: 18.08.88

(54) Verfahren zur Herstellung von bindemittellosen Briketts aus Stahlwerksstäuben.

(30) Priorität: 25.09.87 DE 3732351

(43) Veröffentlichungstag der Anmeldung:
29.03.89 Patentblatt 89/13

(45) Bekanntmachung des Hinweises auf die
Patenterteilung:
17.04.91 Patentblatt 91/16

(84) Benannte Vertragsstaaten:
AT BE DE ES FR GB IT LU NL SE

(56) Entgegenhaltungen:
EP-A- 0 097 292

(56) Entgegenhaltungen:
DE-A- 2 625 223
DE-C- 3 529 084
FR-A- 1 006 195
FR-A- 2 313 450

(73) Patentinhaber: METALLGESELLSCHAFT AG
Reuterweg 14 Postfach 3724
W-6000 Frankfurt/M.1 (DE)

(72) Erfinder: Szekely, Ladislaus
Hauptstrasse 76
W-6366 Wölfersheim (DE)
Erfinder: Stieler, Fred
Breslauer Strasse 22
W-5056 Heusenstamm (DE)

## Beschreibung

Die Erfindung betrifft ein Verfahren zur Herstellung von bindemittellosen Briketts für den Einsatz in eine Verhüttung aus metallisches Eisen enthaltenden feinkörnigen Stahlwerksstäuben, wobei die Stahlwerksstäube aufgeheizt werden, im heißen Zustand auf einer Walzenbrikettierpresse brikettiert werden, und die heißen Briketts mit Luft abgekühlt werden.

Bei der Stahlherstellung fallen, z.B. in den Elektrofiltern der Entstaubung der Abgase aus Konvertern und Elektrolichtbogenöfen, sehr feinkörnige Stäube an, die einen hohen Gehalt an $Fe_2O_3$, FeO und metallischem Eisen haben. Der Gehalt an CaO und MgO ist stark schwankend und kann Bereiche von 3-30% erreichen.

Die feine Körnung der Elektrofilterstäube von etwa 60% kleiner 0,045 mm und ihre große spezifische Oberfläche von 7000-9300 cm²/g führt zu einem niedrigen Schüttgewicht von etwa 1 t/m³ bei einem spezifischen Gewicht von etwa 5 g/cm³ und einer hohen Reaktionsfreudigkeit des Gehaltes an metallischem Eisen und FeO mit Sauerstoff oder sauerstoffhaltigen Gasen bei Temperaturen über etwa 130°C. Bei einem Gesamtgehalt an Eisen von 60-75% liegt der FeO-Gehalt üblicherweise bei 15-25%, und der Gehalt an metallischem Eisen beträgt bis zu etwa 24%.

Bei in Verdampfungskühlern anfallenden Stäuben schwankt der Gehalt an CaO und MgO wie bei den Elektrofilterstäuben. Die Körnung dieser Stäube ist wesentlich gröber und liegt etwa zu 90% zwischen 0,045 und 1 mm. Das Schüttgewicht liegt bei etwa 3 t/m³ und das spezifische Gewicht bei etwa 6 g/cm³. Der Gesamtgehalt an Eisen liegt bei 80-93%, der FeO-Gehalt bei 2-10% und der Gehalt an metallischem Eisen bei 70-88%. Bei etwa 350°C wird sowohl das metallische Eisen als auch der FeO-Gehalt mit Sauerstoff aus der Umgebung oxidiert.

Die Oxidationsneigung dieser Stäube ist so groß, daß jedes Sauerstoff-Angebot aus der Umgebung zur Oxidation führt, wobei auch ein $CO_2$-Gehalt in Rauchgasen unter $CO_2$-Spaltung zur Oxidation führt. Bei einem Versuch mit 650°C Staubtemperatur wurde in Rauchgasen durch $CO_2$-Spaltung in Sauerstoff, CO und Ruß eine Oxidation festgestellt, die einer Oxidation von etwa 9,4% Fe zu FeO entspricht.

Aufgrund dieser Eigenschaften ist eine Lagerung und Wiedereinsetzung dieser Stäube in unbehandelter Form nicht möglich.

Aus der DE-PS-3 223 203 ist es bekannt, diese Stäube zu brikettieren, wobei die Stäube mit einer Temperatur von mehr als 200°C vor dem Brikettieren mit oxidierenden Gasen durchblasen werden und durch Oxidation eines Teiles des metallischen Eisens die Temperatur der Stäube auf 450-650°C erhöht wird. Die Brikettierung erfolgt auf einer Walzenbrikettpresse mit einem Walzenpreßdruck von mehr als 6 kN/cm Walzenbreite. Die heißen Briketts werden in einem Luftstrom auf eine Temperatur unter 100°C abgekühlt. Durch die erforderliche Reoxidation des metallischen Eisens wird dabei die vorherige Reduktionsarbeit, die unter erheblichem Energieaufwand erfolgte, wieder zunichte gemacht.

Der Erfindung liegt die Aufgabe zugrunde, solche Stäube ohne Reoxidation zu brikettieren und dabei in wirtschaftlicher Weise auch bei schwankenden Gehalten an metallischem Eisen, FeO, CaO und MgO Briketts mit konstanten Qualitäten zu erzeugen.

Die Lösung dieser Aufgabe erfolgt erfindungsgemäß dadurch, daß die Stahlwerksstäube mit einem Gehalt an metallischem Eisen von mehr als 15% in einem indirekt beheizten Drehrohr unter in Bezug auf das metallische Eisen inerter Atmosphäre auf eine Brikettiertemperatur von über 500°C aufgeheizt werden, die aufgeheizten Stäube in der Walzenbrikettierpresse unter inerter Atmosphäre mit einem Walzendruck von 60 bis 150 kN/cm Walzenbreite brikettiert werden, die heißen Briketts unter inerter Atmosphäre vom Feinanteil abgetrennt werden, die Briketts mit Luft auf eine Temperatur unter 130°C abgekühlt werden, und der Feinanteil in das Drehrohr zurückgeführt wird. Es kann eine Staubart oder ein Gemisch aus mehreren Staubarten verwendet werden.

Das Drehrohr wird in einem Aufheizofen von außen durch heiße Gase als Heizmittel auf die gewünschte Temperatur aufgeheizt. Die Stäube werden in das Beschickungsende des Drehrohres chargiert, wandern durch dieses Rohr und treten mit der gewünschten Temperatur am anderen Ende des Rohres aus. Diese Temperatur liegt zwischen 500 und 850°C und richtet sich nach der Art der Stäube. Die optimale Temperatur kann durch Versuche ermittelt werden. In das Drehrohr wird ein inertes Gas, vorzugsweise Stickstoff am Beschickungsende eingeleitet und am anderen Ende abgezogen. Das Drehrohr ist gegen den Eintritt von Luft abgedichtet. Die heißen Stäube werden unter Luftabschluß, vorzugsweise über ein geschlossenes Schurrensystem in die Walzenbrikettierpresse geleitet. Der Austrag der Walzenbrikettierpresse wird in eine Siebung geleitet, wo das Feinkorn abgetrennt und wieder in das Drehrohr zurückgeleitet wird. Das ganze System steht unter einer inerten Atmosphäre. Die heißen Briketts werden, z.B. auf einem Plattenband, mittels hindurchgeblasener Luft schnell abgekühlt.

Eine vorzugsweise Ausgestaltung besteht darin, daß das aus dem Drehrohr austretende aufgeheizte inerte Gas in das Drehrohr zurückgeleitet wird. Dadurch wird das inerte Gas wieder verwendet und auch sein Wärmeinhalt wieder in das Drehrohr eingebracht.

Eine vorzugsweise Ausgestaltung besteht darin, daß das Brenngas und/oder die Brennluft für die Beheizung des Drehrohres in einem Wärmeaustauscher durch das austretende Rauchgas vorgewärmt wird. Dadurch wird die zur Aufheizung erforderliche Energiemenge in einfacher Weise verringert.

Die Erfindung wird anhand der Figur und eines Beispieles näher erläutert.

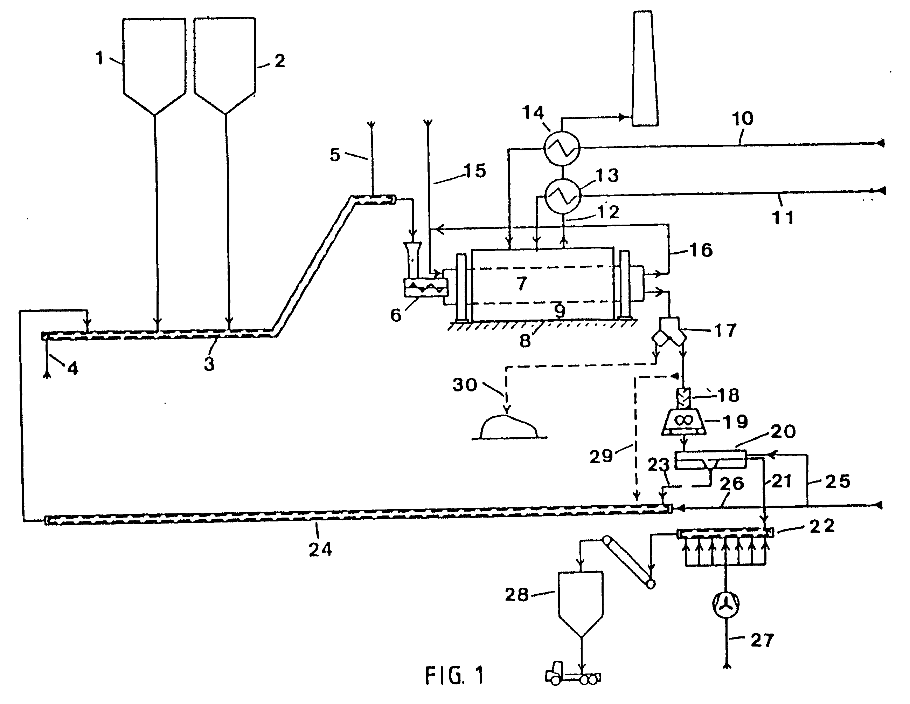

Fig. 1 zeigt schematisch eine Anlage zur Brikettierung der Stäube.

Aus dem Bunker (1) wird Elektrofilterstaub und aus dem Bunker (2) Verdampferkühlerstaub abgezogen und in die Förderleitung (3) (Redler, Becherwerk) eingespeist. In die Förderleitung (3) wird über Leitungen (4) und (5) Stickstoff eingeleitet. Die Stäube werden aus der Förderleitung (3) in die Förderschnecke (6) und von dort in das Drehrohr (7) im Aufheizofen (8) chargiert. In den Ringraum (9) des Aufheizofens (8) wird über Leitung (10) Luft und über Leitung (11) brennbares Gas eingeleitet und im Ringraum (9) verbrannt. Das Abgas wird aus dem Ringraum (9) über Leitung (12) abgezogen und durch die Wärmeaustauscher (13) und (14) geleitet, in denen die Luft und das Gas vorgewärmt werden. In das Drehrohr (7) wird über Leitung (15) Stickstoff eingeleitet. Der Stickstoff wird über Leitung (16) aus dem Drehrohr (7) abgezogen und wieder zurückgeführt. Die aufgeheizten Stäube werden aus dem Drehrohr (7) in ein geschlossenes Schurrensystem (17) ausgetragen und in die Beschickungsschnecke (18) chargiert. Von dort gelangen sie in die Walzenbrikettierpresse (19). Der Austrag der Walzenbrikettierpresse (19) gelangt in die Siebstation (20), aus welcher die heißen Briketts über Leitung (21) auf das Plattenband (22) und das Feingut über Leitung (23) in die Förderleitung (24) chargiert werden. Über Leitung (25) wird Stickstoff in die Siebstation (20) und über Leitung (26) in die Förderleitung (24) eingespeist. Über Leitung (27) wird auf dem Plattenband (22) Luft durch die Briketts geblasen. Die gekühlten Briketts werden in den Bunker (28) gefördert und aus diesem abtransportiert. Über Leitung (29) kann heißer Staub unter Umgehung der Walzenbrikettierpresse (19) in die Förderleitung (24) und damit in das Drehrohr (7) zurückgeführt werden. Über Leitung (30) kann Staub aus dem System ausgeschleust werden.

Das ganze System ist gasdicht miteinander verbunden, auch an den Stellen, die zur Vereinfachung durch Striche verbunden dargestellt sind.

Ausführungsbeispiele :

Das Drehrohr hatte einen Innendurchmesser von 0,62 m und eine Länge von 4,5 m und war mit 6 Brennern ausgerüstet. Die Stäube wurden unter Stickstoffatmosphäre aufgeheizt. Die Durchsatzleistung betrug 0,25 t/h.

Es wurde eine Mischung aus 60% Elektrofilterstaub und 40% Verdampfungskühlerstaub und eine Mischung aus jeweils 50% der beiden Stäube eingesetzt. In Versuch 1 betrug die Aufheiztemperatur 680°C und im Versuch 2 600°C.

Die Stäube hatten folgende Zusammensetzung :

| Chemische Zusammensetzung | Elektro- filterstaub | Verdampfungs- kühlerstaub |
|---|---|---|
| $Fe_{ges}$ | 72,0 % | 92,3 % |
| $Fe_{met}$ | 21,7 % | 88,3 % |
| $FeO$ | 24,4 % | 2,1 % |
| $CaO$ | 3,0 % | 4,5 % |
| $MgO$ | 0,26 % | 0,05 % |
| $SiO_2$ | 1,5 % | 0,5 % |
| $Al_2O_3$ | 0,17 % | 0,1 % |
| $P$ | 0,07 % | 0,04 % |
| $Mn$ | 0,62 % | 0,16 % |
| $Zn$ | 1,2 % | 0,08 % |
| $Pb$ | 0,17 % | 0,05 % |

| Chemische Zusammensetzung | Elektro- filterstaub | Verdampfungs- kühlerstaub |
|---|---|---|
| Kornverteilung | | |
| +1 mm | - | 8,0 % |
| 0,2 - 1 mm | 4,8 % | 70,9 % |
| 0,045 - 0,2 mm | 36,2 % | 19,7 % |
| -0,045 mm | 59,0 % | 1,4 % |
| Spez. Oberfläche | 7443 $cm^2/g$ | - |

| Versuch | 1 | 2 |
|---|---|---|
| Elektrofilterstaubanteil (%) | 60 | 50 |
| Verdampfungskühlerstaubanteil (%) | 40 | 50 |
| Brikettiertemperatur (°C) | 650 | 550 |
| Schüttgewicht Presseaufgabegut $(t/m^3)$ | 1,66 | 1,91 |
| Brikettierdruck (kN/cm Walzenbreite) | 125 | 125 |
| Leistung (kg Brikett/h) | 9051 | 10860 |
| Brikettgewicht (g/Brikett) | 117,8 | 116,9 |
| Brikettraumgewicht $(g/cm^3)$ | 4,57 | 4,64 |
| Druckfestigkeit, kalt (N/Brikett) | 5685 | 5845 |

Chem. Zusammensetzung der Briketts

| | | |
|---|---|---|
| $Fe_{ges}$ | 80,3 % | 82,2 % |
| $Fe_{met}$ | 48,0 % | 54,8 % |
| $FeO$ | 15,4 % | 13,0 % |

Die Vorteile der Erfindung bestehen darin, daß die Stäube ohne Reoxidation in Brikettform überführt werden könnten, wobei Briketts mit sehr guten Eigenschaften auch bei schwakender Zusammensetzung der Stäube erzielt werden können. Die Aufheizung in der Drehtrommel ermöglicht eine Konstanthaltung des Füllungsgrades unabhängig vom Fließverhalten der Stäube infolge starker Schwankungen des Gehaltes an CaO und MgO, so daß ein gleichmäßiger Austrag und eine gleichmäßige Temperatur gesichert sind. Wegen der guten Abdichtungsmöglichkeiten ist nur ein geringer Stickstoffstrom zur Inertisierung erforderlich.

## Ansprüche

1. Verfahren zur Herstellung von bindemittellosen Briketts für den Einsatz in eine Verhüttung aus metallisches Eisen enthaltenden feinkörnigen Stahlwerksstäuben, wobei die Stahlwerksstäube aufgeheizt werden, im heißen Zustand auf einer Walzenbrikettierpresse brikettiert werden, und die heißen Briketts mit Luft abgekühlt werden, dadurch gekennzeichnet, daß die Stahlwerksstäube mit einem Gehalt an metallischem Eisen von mehr als 15% in einem indirekt beheizten Drehrohr unter in Bezug auf das metallische Eisen inerter Atmosphäre auf eine Brikettiertemperatur von über 500°C aufgeheizt werden, die aufgeheizten Stäube in der Walzenbrikettierpresse unter inerter Atmosphäre mit einem Walzendruck von 60 bis 150 kN/cm Walzenbreite brikettiert werden, die heißen Briketts unter inerter Atmosphäre vom Feinanteil abgetrennt werden, die Briketts mit Luft auf eine Temperatur unter 130°C abgekühlt werden, und der Feinanteil in das Drehrohr zurückgeführt wird.

2. Verfahren nach Anspruch 1, dadurch gekennzeichnet, daß das aus dem Drehrohr austretende aufgeheizte inerte Gas in das Drehrohr zurückgeleitet wird.

3. Verfahren nach Anspruch 1 oder Anspruch 2, dadurch gekennzeichnet, daß das Brenngas und/oder die Brennluft für die Beheizung des Drehrohres in einem Wärmeaustauscher durch das austretende Rauchgas vorgewärmt wird.

## Claims

1. A method for the production of briquettes, free of binding agents, for charging into a smelting from fine-grained steelmaking dusts containing metallic iron, wherein the steelmaking dusts are heated up, briquetted in hot state on a roller briquetting press and the hot briquettes are cooled by air,
characterized in that the steelmaking dusts with a metallic iron content of more than 15% are heated up to a briquetting temperature of over 500°C in an indirectly heated revolving cylinder under an atmosphere which is inert with respect to metallic iron, the heated dusts are briquetted in the roller briquetting press under an inert atmosphere with a roller pressure of 60 to 150 kN/cm roller width, the hot briquettes are separated from the fine component under an inert atmosphere, the briquettes are cooled by air to a temperature below 130°C, and the fine component is returned into the revolving cylinder.

2. A method according to Claim 1, characterized in that the heated inert gas emerging from the revolving cylinder is returned into the revolving cylinder.

3. A method according to Claim 1 or Claim 2, characterized in that the combustion gas and/or the combustion air for the heating of the revolving cylinder is preheated in a heat exchanger by the emerging flue gas.

## Revendications

1. Procédé de fabrication de briquettes sans liant, destiné à être utilisé dans un procédé métallurgique, à partir de poussières d'aciéries à grains fins et contenant du fer métallique, les poussières d'aciéries étant chauffées, étant briquetées à l'état chaud dans une presse de briquetage à cylindres et les briquettes chaudes étant refroidies par de l'air, caractérisé en ce qu'il consiste à chauffer les poussières d'aciéries ayant une teneur en fer métallique supérieure à 15% dans un tube rotatif à chauffage indirect, sous une atmosphère inerte pour le fer métallique, à une température de briquetage supérieure à 500°C, à briqueter les poussières chauffées dans la presse de briquetage à cylindres sous une atmosphère inerte avec une pression des cylindres de 60 à 150 kN/cm de largeur des cylindres, à séparer les briquettes chaudes sous atmosphère inerte des fines, à refroidir les briquettes par de l'air à une température inférieure à 130°C et à retourner les fines au tube rotatif.

2. Procédé selon la revendication 1, caractérisé en ce qu'il consiste à retourner au tube rotatif le gaz inerte chauffé qui en sort.

3. Procédé selon la revendication 1 ou la revendication 2, caractérisé en ce qu'il consiste à préchauffer le gaz de combustion et/ou l'air de combustion destiné au chauffage du tube rotatif dans un échangeur de chaleur par le gaz de fumée qui sort.

FIG. 1

EP 0 309 016 B1